# EUROPÄISCHE PATENTANMELDUNG

(11) **EP 0 949 098 A1**
(43) Veröffentlichungstag der Anmeldung: **13.10.1999**
(21) Anmeldenummer: 99105162.4
(22) Anmeldetag: 30.03.1999
(51) Int. Cl.: B60H 1/26

(54) **Dachlüfter**

(30) Priorität: 08.04.1998 DE 19815893
(71) Anmelder: AURORA Konrad G. Schulz GmbH & Co, 69427 Mudau (DE)
(72) Erfinder: Jäger, Bernd, 69412 Eherbach-Friedrichsdorf (DE)
(74) Vertreter: Baronetzky, Klaus, Dipl.-Ing.

(57) **Zusammenfassung**

Die Erfindung bezieht sich auf einen Dachlüfter mit einer Haube (12), die einen Dachausschnitt in der Dachhaut (14) eines Fahrzeugs abdeckt und ein darunter liegendes Axialgebläse (22) unterhalb der Haube. Das Axialgebläse (22) ist über Stützelemente (20), insbesondere Luftleitflügel, an einem dachfesten Flansch (18) abgestützt und im wesentlichen oberhalb der Dachhaut (14) gelagert.

## Beschreibung

Die Erfindung betrifft einen Dachlüfter gemäß dem Oberbegriff von Anspruch 1.

Ein derartiger Dachlüfter ist in unterschiedlich Arten bekannt worden, beispielsweise aus der DE-OS 33 16 823. Diese Druckschrift zeigt ein Axialgebläse zur Entlüftung eines Fahrzeug-Innenraums, wobei zwar eine relativ geringe Bauhöhe oberhalb der Dachhaut des Fahrzeugs erreicht wird, jedoch die Einbautiefe, also die Erstreckung des Dachlüfters unterhalb der Dachhaut, beträchtlich ist.

Es sind zahlreiche Versuche unternommen worden, Dachlüfter und insbesondere die zugehörigen Gebläsemotoren platzsparend unterzubringen, wobei gegenläufige Forderungen hinsichtlich der Aufbauhöhe des Dachlüfters auf dem Dach des Fahrzeugs einerseits und andererseits der bereitzustellenden Strömungsquerschnitte bestehen. Gemäß der DE-PS 30 03 224 hat man beispielsweise versucht, mit einem relativ kompakten Lüfterrad einen flachbauenden Dachlüfter zu realisieren. Bei Wohnwägen, für die diese Konstruktion bestimmt ist, ist jedoch der Lüftungswirkungsgrad weit weniger wichtig als beispielsweise bei Großraumfahrzeugen, die von einer Vielzahl von Fahrgästen benützt werden können, die je mit Frischluft versorgt werden müssen.

Andererseits werden Wohnwägen häufig nur in geringem Umfang und insbesondere eher selten transportiert und verbleiben die überwiegende Zeit des Jahres an zwei Stellen, nämlich im Bereich der Heimat des Wohnwagenbesitzers einerseits und an seinem Urlaubsort andererseits, so daß überwiegend von einer stationären Benutzung ausgegangen werden kann. Demgegenüber ist die bestimmungsgemäße Benutzung von Großraumfahrzeugen wie Bussen der Transport von Fahrgästen, so daß Überlegungen hinsichtlich des Luftwiderstands bei Bussen weit relevanter als bei Wohnwägen sind, zumal die Tendenz zu höheren Höchstgeschwindigkeiten bei derartigen Bussen besteht.

Daher liegt der Erfindung die Aufgabe zugrunde, einen Dachlüfter gemäß dem Oberbegriff von Anspruch 1 zu schaffen, der auch für hohe Geschwindigkeiten des Fahrzeugs, in dem der Dachlüfter eingebaut ist, geeignet ist, aber dennoch eine gute Be- oder Entlüftungswirksamkeit bietet.

Diese Aufgabe wird erfindungsgemäß durch Anspruch 1 gelöst. Vorteilhaft Weiterbildungen ergeben sich aus den Unteransprüchen.

Erfindungsgemäß sind Stützelemente ganz knapp oberhalb der Flügel des Lüfterrads in einer Weise vorgesehen, daß sie einerseits eine gute und flache Abstützung des Axialgebläses beziehungsweise dessen Gehäuses bieten, aber andererseits die Luftströmung nicht beeinträchtigen.

Das Axialgebläse ist ziemlich flach und mit großem Querschnitt ausgebildet, was einen verbesserten Lüftungswirkungsgrad bietet. Das erfindungsgemäße Stützelement ist bevorzugt an einem Flansch abgestützt, der den Dachausschnitt umklammert und damit einen sicheren Halt bietet. Damit erlaubt das erfindungsgemäße Stützelement trotz der vollen Beaufschlagung durch die Abluft des Gebläserads die stabile und resonanzdämpfende Lagerung sowohl des Gebläsemotors als auch der Haube, wobei die Haube bei Bedarf mit zusätzlichen Stütz- oder Zugpfosten versehen sein kann, die zusätzlich abstützend wirken können und bei Bedarf auch den aufgrund des Fahrtwinds erzeugten Unterdruck kompensieren können. Es versteht sich, daß Unterdruck auf der Oberseite der Haube hauptsächlich im bezogen auf die Fahrtrichtung rückwärtigen Bereich der Haube bei schneller Fahrt entsteht.

Bevorzugt ist der Flansch für die Lagerung der Stützelemente so weit hochgezogen, daß er zugleich als Spritzwand geeignet ist und dementsprechend dazu dient, von außen eintretendes Schwallwasser sicher abzuweisen.

In diesem Zusammenhang ist es günstig, wenn der Entlüft- oder Ansaugschlitz ausschließlich im rückwärtigen und hieran angrenzenden seitlichen Bereichen der Haube vorgesehen ist, während nach vorne und zur vorderen Seite hin ein Dichtelement gegen die Dachhaut abdichtet, so daß das mit hohem Druck durch den Fahrtwind über die Dachhaut getriebene Wasser dort abgeführt wird und dann nicht in den Bereich des Dachlüfters gelangen kann.

Bevorzugt ist der Dachlüfter sehr flach, wobei beispielsweise eine Bauhöhe von 70mm über der Dachhaut eingehalten sein kann. Dennoch erlaubt die besondere Ausgestaltung, gerade auch mit dem nach außen spitz zulaufenden Lüfterrad, dessen Unterseite flach ist, den gesamten Gebläsemotor einschließlich des Lüfterrads oberhalb der Dachhaut enden zu lassen. Die Höhe der Dachhaut selbst steht damit vollständig für ein Verschlußelement zur Verfügung, das es bei Bedarf ermöglicht, den Dachlüfter in Betrieb zu setzen oder zu schließen.

Bevorzugt kann das Verschlußelement als Schraubdeckel ausgebildet sein, der in einer Art Gewinde geführt ist und beim Verschwenken um etwa 90° in seiner Öffnungsstellung absenkbar ist. Die Ausgestaltung kann so gewählt sein, daß das Verschlußelement in geschlossenem Zustand vollständig im Dach des Fahrzeugs aufgenommen ist, abgesehen gegebenenfalls von einem Griff. Hierzu ist das Verschlußelement bevorzugt - aus Sicht der Fahrgäste betrachtet - konkav, wobei die Luftströmung über einen großen und insbesondere breiten Spalt um seinen Rand erfolgen kann.

Es versteht sich, daß beliebige andere Arten von Verschlußelementen anstelledessen eingesetzt werden können. Beispielsweise kann ein Schieber eingesetzt werden, der gegenüber dem Dach praktisch nicht aufträgt. Auch kann eine Klappe vorgesehen sein, die in ihren beiden Endpositionen sehr dachnah gehalten sein kann.

Es ist günstig, wenn das Verschlußelement zugleich einen Schalter betätigt, der auf den Gebläsemotor wirkt. Bei dieser Ausgestaltung ist kein separater Schalter für das Dachlüftergebläse erforderlich; vielmehr läuft der Gebläsemotor dann automatisch an, wenn der betreffende Fahrgast oder Fahrer des Busses das Verschlußelement öffnet.

Der Dachlüfter kann sowohl als Entlüftorgan als auch zur Belüftung eingesetzt werden. Beim Einsatz zur Belüftung ist es besonders günstig, daß bei geöffnetem Verschlußelement ein relativ großer Raum zwischen dem unteren Ende des Lüfterrads und dem Verschlußelement zur Verfügung steht, wenn das Verschlußelement sich in der geöffneten Position befindet. Dieser Raum wirkt als Druckraum zur Strömungsvergleichmäßigung, und die Luftströmung kann mit gutem Wirkungsgrad recht zugfrei kreisförmig um das Verschlußelement austreten, so daß sie im wesentlichen an dem Dachhimmel innen entlang verläuft und zur zugfreien Innenraumbelüftung beiträgt.

Bei Bedarf kann gerade für die Belüftung im Ansaugbereich ein Schutzgitter eingesetzt sein. Dieses erstreckt sich bevorzugt als stehendes Ringgitter um das umgebogene Ende der Schwallwand, also des Flansches. Bei dieser Ausgestaltung ergibt sich ein sehr großflächiges Ansaug-Schutzgitter, so daß auch eine starke Filterverschmutzung erst zu einem relativ geringen Druckabfall über das Filter führt.

Trotz der kompakten Ausgestaltung läßt sich mit dem erfindungsgemäßen Dachlüfter eine ziemlich hohe Luftleistung von beispielsweise 350 m3/h erzielen, und das, obwohl ein sehr leistungsbegrenzter Gebläsemotor von weniger als 60 Watt einsetzbar ist.

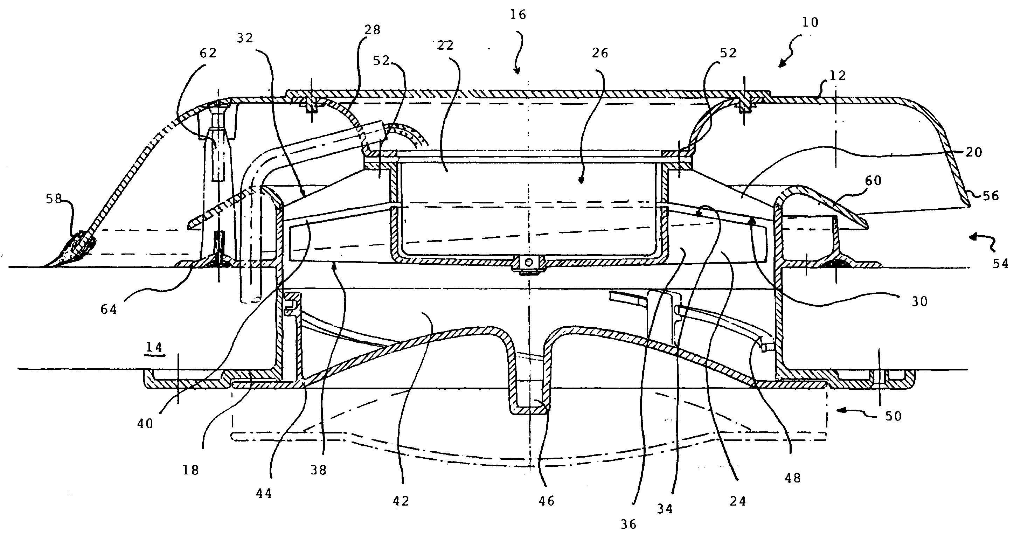

Weiter Einzelheiten, Vorteile und Merkmale ergeben sich aus der nachfolgenden Beschreibung eines Ausführungsbeispiels anhand der Zeichnung.

Es zeigt:
Die einzige Figur einen Schnitt durch eine Ausführungsform eines erfindungsgemäßen Dachlüfters, der bereits in das Dach eines Fahrzeugs eingebaut ist.

Der in der Figur dargestellte Dachlüfter 10 weist eine Haube 12 auf, die sich flach über eine Dachhaut 14 erstreckt. Es ist ein Dachausschnitt 16 in der Dachhaut vorgesehen, der den Dachlüfter 10 aufnimmt. Der Dachausschnitt 16 ist ringförmig mit einem Flansch 18 versehen, der die Dachhaut 14 von oben und von unten umklammert und damit eine sichere Verbindung bietet. Der Flansch 18 ist bevorzugt zweistückig ausgebildet und weist geeignete Befestigungselemente gegenüber der Dachhaut, beispielsweise Schraubverbindungen, auf.

Auf dem Flansch 18 sind Stützelemente 20 abgestützt, die sich sternförmig um ein Axialgebläse 22 erstrecken. Das Axialgebläse 22 weist ein Lüfterrad 24 und einen Gebläsemotor 26 auf. Bevorzugt ist das Axialgebläse 22 als Glockenläufer ausgebildet, so daß das Lüfterrad 24 den Motor 26 umgibt. Die Bauhöhe des Motors ist nur etwas höher als die Bauhöhe des Lüfterrads und beträgt beispielsweise 4cm. Demgegenüber beträgt der Durchmesser des Motors beispielsweise 10cm, während der Durchmesser des Axialgebläses knapp 20cm betragen kann. Mit dieser Ausgestaltung läßt sich eine sehr flache Ausführung des erfindungsgemäßen Dachlüfters 10 gewährleisten.

Dennoch ist ein gutes Strömungsprofil erzielbar; die Haube ist anschließend an die Stützelemente 20 mit einem Luftleitelement 28 versehen, das die Luftströmung des Lüfterrads 24 mit großem Strömungsquerschnitt und sanft umlenken kann, wobei das Luftleitelement 28 zugleich als Träger für die Haube 12 dient, die dementsprechend auch auf den Stützelementen 20 abgestützt ist.

Es versteht sich, daß die Anzahl der Stützelemente 20 in weiten Bereichen an die Erfordernisse anpaßbar ist. Beispielsweise können sechs Stützelemente gleichmäßig um den Umfang verteilt um das Axialgebläse 22 vorgesehen sein. Bevorzugt ist jedes Stützelement 20 als schmale und in Strömungsrichtung ausgerichtete Strebe ausgebildet, so daß durch die dort vorbeiströmende Luft diese höchstens entwirbelt und gleichgerichtet wird, jedoch keine zusätzlichen Wirbel erzeugt werden.

Das Lüfterrad 24 ist in einer besonderen, an die Stützelemente angepaßten Weise ausgebildet. Die Stützelemente erstrecken sich nach außen konvergierend, was sowohl strömungstechnisch als auch belastungstechnisch besondere Vorteile bietet, nachdem dann im Bereich höchster Last die größte Materialhöhe zur Verfügung steht. Die Unterkante 30 jedes Stützelements 20 verläuft leicht schräg nach unten/außen. Demgegenüber verläuft die Oberkante 32 jedes Stützelements stärker schräg nach unten/außen. In einer Neigung, die der Unterkante 30 angepaßt ist, erstreckt sich die Oberkante 34 jedes Flügels 36 des Lüfterrads, wobei es sich versteht, daß der Flügel in an sich bekannter Weise schräg stehend ausgebildet ist.

In der Projektion gemäß der Zeichnung, die die radiale Ebene des Lüfterrads 24 zeigt, ist dennoch jeder Flügel nach außen konvergierend ausgebildet, wobei die Unterkante 38 jedes Flügels 36 in der Radialebenenprojektion im wesentlichen flach verläuft. Sie endet bevorzugt knapp oberhalb der Dachhaut 14, wobei es sich versteht, daß eine geringe Abweichung nach unten unschädlich ist.

Die dargestelle Ausführungsform beläßt einen geringen Spalt 40 zwischen dem Stützelement 20 und der Oberkante 34 des Lüfterrads 24. Dieser Spalt kann so gewählt sein, wie es für den Lüfterwirkungsgrad bevorzugt ist.

Gemäß einer modifizierten Ausgestaltung ist jedes Stützelement 20 gekrümmt vorgesehen, und zwar so, daß sich die Unterkante 30 im wesentlichen parallel zur Drehrichtung des Lüfterrads 24 erstreckt, und die Oberkante 32 jedes Stützelements im wesentlichen aufrecht verläuft.

Die Stützelemente 20 können auch in Abhängigkeit davon unterschiedlich ausgebildet sein, ob der Dachlüfter für die Belüftung oder für die Entlüftung des Fahrzeugs vorgesehen ist. Bevorzugt ist das Stützelement 20 jedenfalls strömungstechnisch besonders günstig ausgebildet, so daß es keine zusätzlichen Turbulenzen hervorruft. Beim Betrieb des Dachlüfters 10 für die Belüftung wirkt der Raum unterhalb des Lüfterrads 24, also im wesentlichen der Dachausschnitt 16, als Stauraum 42. An ihn schließt sich unten ein Verschlußelement 44 an, das in dem dargestellten Ausführungsbeispiel im wesentlichen konkav ausgebildet ist und mittig eine Greifhandhabe 46 aufweist.

Das Verschlußelement 44 ist an einem Innengewinde 48 des Flansches 18 gelagert, so daß ein Schwenken des Verschlußelements 44 über die Greifhandhabe 46 zur Überführung in die geöffnete Position führt. Diese Position ist in der Figur gestrichelt angedeutet, wobei lediglich der dort dann entstehende Ringspalt 50 sich auf die durchgezogen dargestellte Ausführungsform des Verschlußelements 44 bezieht, während der mittlere Bereich des gestrichelt dargestellten Verschlußelements 44 eine modifizierte Ausgestaltung zeigt.

Es versteht sich, daß die genaue Ausgestaltung des Verschlußelements, das übrigens einen hier nicht dargestellten Mikroschalter für die Betätigung des Motors 26 steuert, in weiten Bereichen an die Erfordernisse angepaßt werden kann. Es ist auch möglich, ein von einer weichen Feder getragenes Verschlußelement vorzusehen, das im Normalbetrieb angedrückt wird und damit den Dachlüfter 10 abschließt, während beim Aufbau des Überdrucks im Stauraum 46 das Verschlußelement nach unten gedrückt wird, so daß der Ringspalt 50 entsteht. Damit läßt sich ein automatisch betätigbares Verschlußelement realisieren, so daß beispielsweise der Fahrer des Busses zentral die Dachlüfter 10 einschalten kann und hiervon gesteuert die Verschlußelemente 44 geöffnet und geschlossen werden.

Die Haube 12 ist über Schraubbefestigungen 52 sicher auf dem Axialgebläse 22 verankert, wobei die Schraubbefestigungen 52 sich praktisch bis in den Bereich der Stützelemente 20 hinein erstrecken. An dieser Stelle weist das Gebläsegehäuse einen Ringflansch auf, der eine Innenecke bildet, die von der Strömung entlang der Stützelemente 20 nur am Rande tangiert wird, so daß ein vorstehender Schraubenkopf strömungstechnisch unproblematisch ist. Die Haube 12 ist in dem dargestellten Ausführungsbeispiel zweistückig mit dem Luftleitelement 28, wobei es sich versteht, daß auch eine einstückige Ausgestaltung ohne weiteres möglich ist. Im bezogen auf die Fahrtrichtung hinteren Bereich erstreckt sich ein Luftschlitz 54 in voller Höhe. Dieser konvergiert in dem dargestellten Ausführungsbeispiel nach vorne, wobei der vordere und der seitliche vordere Bereich des Endes 56 der Haube 12 von einem aufgestülpten Dichtelement 58 abgedeckt ist, das eine sichere Abdichtung gegen die Dachhaut 14 gegenüber durch den Fahrtwind transportiertes Schwallwasser bietet. Hierdurch wird das Schwallwasser seitlich abgeleitet, ohne überhaupt den Bereich der Schwallwand 60 zu erreichen.

In dem dargestellten Ausführungsbeispiel ist die Haube 12 vorne zusätzlich über zwei Stützen auf der Dachhaut abgestützt, von denen eine Stütze 62 in der Figur dargestellt ist. Die Stützen erstrecken sich zug- und drucksicher zwischen der Haube 12 und einem Zusatzflansch 64 des Flansches 18, der einstückig ist und zur Umklammerung des Dachausschnitts 16 flach auf der Dachhaut aufliegt.

## Patentansprüche

1. Dachlüfter, mit einer Haube, die einen Dachausschnitt in der Dachhaut eines Fahrzeugs abdeckt, und mit einem darunter liegenden Axialgebläse unterhalb der Haube, dadurch gekennzeichnet, daß das Axialgebläse (22) über Stützelemente (20), insbesondere Luftleitflügel, an einem dachfesten Flansch (18) abgestützt ist und im wesentlichen oberhalb der Dachhaut (14) gelagert ist.

2. Dachlüfter nach Anspruch 1, dadurch gekennzeichnet, daß das Gebläse (22) die Haube (12) trägt.

3. Dachlüfter nach einem der vorhergehenden Ansprüche, dadurch gekennzeichnet, daß die Stützelemente (20) als Luftleitflügel ausgebildet sind, die sich vom Flansch (18) schräg nach oben zu einem Gehäuse des Gebläses (22) erstrecken.

4. Dachlüfter nach einem der vorhergehenden Ansprüche, dadurch gekennzeichnet, daß das Lüfterrad (24) des Axialgebläses (22) an seinem unteren Ende im wesentlichen bündig mit der Dachhaut (14) abschließt.

5. Dachlüfter nach einem der vorhergehenden Ansprüche, dadurch gekennzeichnet, daß unterhalb des Gebläses (22) ein vertikal bewegliches, insbesondere in der Dachhaut (14) versenkbares, Verschlußelement (44) gelagert ist, mit welchem der Zugang zu dem Dachlüfter (10) insbesondere durch Verdrehen um etwa einen rechten Winkel freigebbar und verschließbar ist.

6. Dachlüfter nach einem der vorhergehenden Ansprüche, dadurch gekennzeichnet, daß der Flansch (18) zugleich als Schwallwand (60) dient und hierzu an seinem oberen Ende, bezogen auf das Axialgebläse (22), nach radial außen umgebogen ist.

7. Dachlüfter nach einem der vorhergehenden Ansprüche, dadurch gekennzeichnet, daß die Haube (12) an ihrem in Fahrtrichtung und/oder gegen die Fahrtrichtung weisenden Ende über zusätzliche Stützen (62) mit dem Flansch (18) oder der Dachhaut (14) verbunden ist, die ein Abheben bei höheren Fahrtgeschwindigkeiten verhindern.

8. Dachlüfter nach einem der vorhergehenden Ansprüche, dadurch gekennzeichnet, daß die Haube (12) an ihrem in Fahrtrichtung vorderen Ende und seitlich des vorderen Endes über ein Dichtelement (58) auf der Dachhaut (14) abgestützt ist und im rückwärtigen seitlichen Bereich der Haube (12) zwischen deren Ende und der Dachhaut (14) ein Luftansaugschlitz vorgesehen ist.

9. Dachlüfter nach einem der vorhergehenden Ansprüche, dadurch gekennzeichnet, daß jedes Stützelement (20) nach radial außen/unten sich verjüngend ausgebildet ist.

10. Dachlüfter nach einem der vorhergehenden Ansprüche, dadurch gekennzeichnet, daß jeder Flügel des Flügelrads (24) des Axialgebläses (22) in der Projektion auf einer sich radial erstreckende Ebene betrachtet nach außen konvergiert.

11. Dachlüfter nach einem der vorhergehenden Ansprüche, dadurch gekennzeichnet, daß das Axialgebläse (22) eine maximale Bauhöhe von weniger als einem Fünftel, insbesondere von etwa einem Achtel, seines Durchmessers aufweist.

12. Dachlüfter nach einem der vorhergehenden Ansprüche, dadurch gekennzeichnet, daß das Lüfterrad (24) sich über im wesentlichen die Hälfte der Höhe des Gebläsemotors (26) erstreckt und diesen überlappt.

13. Dachlüfter nach einem der vorhergehenden Ansprüche, dadurch gekennzeichnet, daß das Verschlußelement (44) einen Schalter, insbesondere einen Mikroschalter, betätigt, der den Gebläsemotor (26) bei geschlossenem Verschlußelement (44) abschaltet.
